# EUROPEAN PATENT APPLICATION

(11) **EP 2 999 313 A1**
(43) Date of publication of application: **23.03.2016**
(21) Application number: 15173912.5
(22) Date of filing: 25.06.2015
(51) Int. Cl.: H05B 37/02, H05B 33/08

(54) **METHOD AND APPARATUS FOR AUTOMATICALLY CONTROLLING A LIGHT SOURCE**

(30) Priority: 22.09.2014 CN 201410486834
(71) Applicant: Xiaomi Inc., Beijing 100085 (CN)
(72) Inventor: REN, Qiao, 100085 BEIJING (CN); YANG, Yun, 100085 BEIJING (CN); GAO, Ziguang, 100085 BEIJING (CN)
(74) Representative: Delumeau, François Guy

(57) **Abstract**

The present disclosure relates to a method and an apparatus for controlling a smart light, which is used for implementing automatic and intellectualized control of the smart light, wherein the method includes: acquiring (S101) status information of a current scene; judging (S102) whether the current scene complies with a scene condition according to the status information; inquiring (S103) a pre-stored light effect configuration library according to the scene condition and generating a light control instruction corresponding to the scene condition if the current scene complies with the scene condition; and sending (S104) the generated light control instruction to the smart light so that the smart light presents a light effect corresponding to the scene condition.

## Description

### TECHNICAL FIELD

The present disclosure relates to the field of electronic technologies, and more particularly, to a method and an apparatus for controlling a smart light.

### BACKGROUND

Smart lights are controllable light sources. In the prior art, a controller is used to control the smart light via manual operations. Apparently, in the prior art, the manual operations are required to control the smart light, and the automatic control is not achieved. Moreover, the control mode of the smart light in the related art is not intelligentized, and the control cannot be made according to changes of the scene statuses, thus limiting the applications of the smart light.

### SUMMARY

In order to overcome the problems in the prior art, embodiments of the present disclosure provide a method and an apparatus for controlling a smart light, which is used for realizing automatic and intellectualized control of the smart light.

According to a first aspect of embodiments of the present disclosure, there is provided a method for controlling a smart light, comprising the steps of:
acquiring status information of a current scene;
judging whether the current scene complies with a scene condition according to the status information;
inquiring a pre-stored light effect configuration library according to the scene condition and generating a light control instruction corresponding to the scene condition if the current scene complies with the scene condition, wherein the light control instruction includes a light effect parameter enabling the smart light to present a light effect, and the light effect configuration library includes a plurality of preset scene conditions and light effect parameters corresponding to respective preset scene conditions; and
sending the generated light control instruction to the smart light so that the smart light presents a light effect corresponding to the scene condition.

In one embodiment, the method may further comprise the steps of:
receiving and storing the scene condition and the light effect parameter corresponding to the scene condition that are set by a user.

In one embodiment, the status information includes communication event information of a target contact; and

the step of judging whether the current scene complies with the scene condition according to the status information may comprise a step of:
judging whether a specific communication event is conducted by the target contact according to the communication event information.

In one embodiment, the communication event information of the target contact includes: sharing contents by the target contact on a network platform; or, receiving communications sent by the target contact.

In one embodiment, the status information includes moving object monitoring event information in a target region; and

the step of judging whether the current scene complies with the scene condition according to the status information may comprise a step of:
judging whether a monitored moving object passes into the target region according to the moving object monitoring event information.

In one embodiment, the status information includes device access event information in the target region, the device access event information including a device identity and a device access time; and

the step of judging whether the current scene complies with the scene condition according to the status information may comprise a step of:
judging whether a first access of a specific device is conducted in the target region within a duration according to the device access event information.

In one embodiment, the status information includes time information; and

the step of judging whether the current scene complies with the scene condition according to the status information may comprise a step of:
judging whether a current time reaches a preset time according to the time information.

In one embodiment, the light effect parameter includes at least one of the following parameters:
a light on-off parameter, a light flicker times parameter, a light color parameter and a light intensity parameter.

According to a second aspect of embodiments of the present disclosure, there is provided an apparatus for controlling a smart light, comprising:
an acquisition module configured to acquire status information of a current scene;
a judgment module configured to judge whether the current scene complies with a scene condition according to the status information;
a generation module configured to inquire a pre-stored light effect configuration library according to the scene condition and generate a light control instruction corresponding to the scene condition if the judgment module judges that the current scene complies with the scene condition, wherein the light control instruction includes a light effect parameter enabling the smart light to present a light effect, and the pre-stored light effect configuration library includes a plurality of preset scene conditions and light effect parameters corresponding to respective preset scene conditions; and
a sending module configured to send the light control instruction generated by the generation module to the smart light so that the smart light presents a light effect corresponding to the scene condition.

In one embodiment, the apparatus may further comprise:
a storage module configured to receive and store the scene condition and a light effect parameter corresponding to the scene condition that are set by a user.

In one embodiment, the status information includes communication event information of a target contact; and

the judgment module may comprise:

a first judgment submodule configured to judge whether a specific communication event is conducted by the target contact according to the communication event information.

In one embodiment, the communication event information of the target contact includes: sharing contents by the target contact on a network platform; or, receiving communications sent by the target contact.

In one embodiment, the status information includes moving object monitoring event information in a target region; and

the judgment module may comprise:
a second judgment submodule configured to judge whether a monitored moving object passes into the target region according to the moving object monitoring event information.

In one embodiment, the status information includes device access event information in the target region, the device access event information including a device identity and a device access time; and

the judgment module may comprise:
a third judgment submodule configured to judge whether a first access of a specific device is conducted in the target region within a duration according to the device access event information.

In one embodiment, the status information includes time information; and

the judgment module may comprise:
a fourth judgment submodule configured to judge whether a current time reaches a preset time according to the time information.

In one embodiment, the light effect parameter includes at least one of the following parameters:
a light on-off parameter, a light flicker times parameter, a light color parameter and a light intensity parameter.

According to a third aspect of the present disclosure, there is provided an apparatus for controlling a smart light, comprising:
a processor; and
a memory for storing instructions executable by the processor;
wherein the processor is configured to:
acquire status information of a current scene;
judge whether the current scene complies with a scene condition according to the status information;
inquire a pre-stored light effect configuration library according to the scene condition and generate a light control instruction corresponding to the scene condition if the current scene complies with the scene condition, wherein the light control instruction includes a light effect parameter enabling the smart light to present a light effect, and the light effect configuration library includes a plurality of preset scene conditions and light effect parameters corresponding to respective preset scene conditions; and
send the generated light control instruction to the smart light so that the smart light presents a light effect corresponding to the scene condition.

A computer program is provided according to a fourth aspect of the present disclosure. The computer program performs the steps of the method for controlling a smart light when this program is executed by a computer.

This program can use any programming language and take the form of source code, object code or a code intermediate between source code and object code, such as a partially compiled form, or any other desirable form.

The invention is also directed to a computer-readable information medium containing instructions of the computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure may include the following advantageous effects: the present disclosure may make corresponding controls according to changes of the scene statuses so as to realize intellectualized control of the smart light and expand the applications of the smart light; and enable the control of the smart light free from manual operation, realize automatic control of the smart light, and make the smart light control more convenient.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for controlling a smart light, according to an exemplary embodiment.
Fig. 2 is a flow chart of a method for controlling a smart light, according to a first exemplary embodiment.
Fig. 3 is an application scene diagram of the method for controlling the smart light, according to the first exemplary embodiment.
Fig. 4 is a flow chart of a method for controlling a smart light, according to a second exemplary embodiment.
Fig. 5 is an application scene diagram of the method for controlling the smart light, according to the second exemplary embodiment.
Fig. 6 is a flow chart of a method for controlling a smart light, according to a third exemplary embodiment.
Fig. 7 is an application scene diagram of the method for controlling the smart light, according to the third exemplary embodiment.
Fig. 8 is a flow chart of a method for controlling a smart light, according to a fourth exemplary embodiment.
Fig. 9 is an application scene diagram of the method for controlling the smart light, according to the fourth exemplary embodiment.
Fig. 10 is a block diagram of an apparatus for controlling a smart light, according to an exemplary embodiment.
Fig. 11 is a block diagram of another apparatus for controlling a smart light, according to an exemplary embodiment.
Fig. 12 is a block diagram of an apparatus suitable for controlling a smart light, according to an exemplary embodiment (general structure of a terminal device).

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

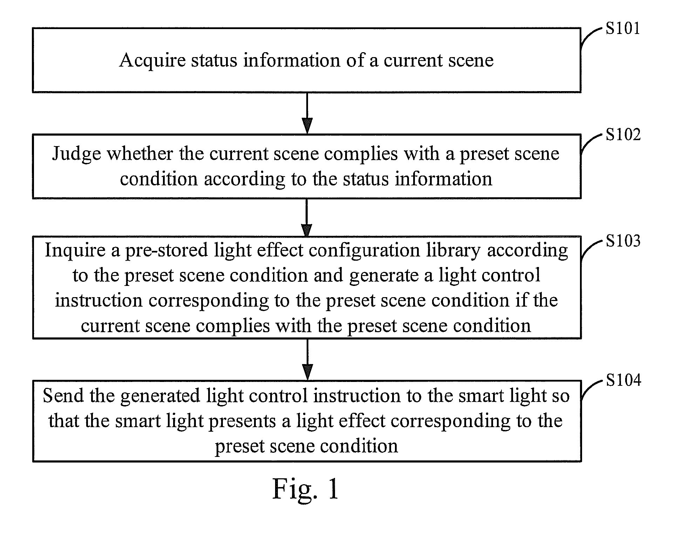

Fig. 1 is a flow chart of a method for controlling a smart light, according to an exemplary embodiment. The method may be applied, for example, in a cloud server, a router, a personal computer, and a terminal device. As shown in Fig. 1, the method comprises the following steps.

In step S101, status information of a current scene is acquired.

In step S101, the status information of the current scene may either be acquired from another device or be acquired locally, which is not specially limited in the present disclosure.

In step S102, whether the current scene complies with a scene condition is judged according to the status information.

In one embodiment, the method may also include: receiving and storing a scene condition and a light effect parameter corresponding to this scene condition that are set by a user. For instance, the user may set a scene condition and a light effect parameter corresponding to this scene condition in an application in a terminal, and the terminal sends to a device implementing the method (for example, a cloud server) the scene condition and light effect parameter; after receiving the scene condition and the light effect parameter sent by the terminal, the device stores the received scene condition and light effect parameter corresponding to the scene condition.

In the embodiment, the scene condition and the light effect parameter corresponding to the scene condition may also be acquired through other manners, for example, by reading a local configuration file and acquiring a scene condition and a light effect parameter corresponding to this scene condition from the configuration file.

In one embodiment, the status information may include communication event information of a target contact. The step S102 may comprise a step of: judging whether a specific communication event is conducted by a target contact according to communication event information.

For instance, the communication event information of the target contact may include: sharing contents by the target contact on a network platform; receiving communications sent from the target contact. By way of example and without limitation, the network platform refers to a social website, the target contact refers to a account number, sharing contents refers to publishing an article, and the scene condition refers to a condition wherein an account number of a social website publishes an article. In this case, in step S101, communication event information, sent by a social website, of an account number publishing an article on a social website is received; in step S102, it is judged, according to the communication event information, that the account number publishes an article on the social website, and then it is determined that the status information of the current scene complies with a scene condition. For another example, the scene condition refers to a condition wherein the target contact sends communications. In step S101, the communication event information of receiving communications sent by the target contact is acquired. In this case, in step S102, it is judged, according to the acquired communication event information, that communications sent by the target contact is received, and then it is determined that the status information of the current scene complies with the scene condition.

In one embodiment, the status information includes moving object monitoring event information in a target region. In this case, the step S102 may include: judging whether a monitored moving object is passes into a target region according to the moving object monitoring event information. By way of example and without limitation, the scene condition refers to a condition wherein a monitored person passes into a target region; in this case in step S101, the moving object monitoring event information that a monitored person passes into a target region is received; in step S102, it is judged, according to the moving object monitoring event information, that the monitored person passes into the target region, and then it is determined that the current scene complies with the scene condition.

In one embodiment, the status information includes device access event information in a target region, the device access event information including an identity and an access time of a device. In this case, the step S102 may include: judging whether a first access (for example, access to a smart device in the target region) of a specific device is conducted in the target region within a preset duration according to the device access event information. By way of example and without limitation, the scene condition refers to a condition wherein a user carrying a specific smartband goes back home. In this case, in step S101, the device access event information of access of the smartband sent by a smart box at home is received, the device access event information including an ID and an access time of the smartband; in step S102, is judged according to the ID and the access time of the smartband included in the of the access event information, whether it is the first access of the smartband at home within a preset duration; if it is judged that it is the first access of the smartband at home within the duration, the current scene is determined to comply with the scene condition.

In one embodiment, the status information includes time information. In this case, the step S102 may include: judging whether the current time reaches a preset time according to the time information.

For example, in this case, in step S102, after judging that it is the first access of a specific device in a target region within a duration according to the device access event information, whether the current time reaches the preset time is judged according to the time information; if the current time reaches the preset time, the current scene is determined to comply with a scene condition.

For another example, the scene condition refers to a condition wherein the current time reaches a preset time. In the step S102, if it is judged that the current time reaches the preset time according to the time information, the current scene is determined to comply with the scene condition.

The foregoing embodiments are merely exemplary, and the implementation manner of step S102 in the embodiments is not limited thereto.

In step S103, when the current scene complies with the scene condition, a pre-stored light effect configuration library is inquired according to the scene condition and a light control instruction corresponding to the scene condition is generated.

The light control instruction includes a light effect parameter enabling the smart light to present a light effect, and the pre-stored light effect configuration library includes a plurality of preset scene conditions and light effect parameters corresponding to respective preset scene conditions.

In one embodiment, the light effect parameter includes at least one of the following parameters: a light on-off parameter, a light flicker times parameter, a light color parameter and a light intensity parameter.

In step S104, the generated light control instruction is sent to the smart light so that the smart light presents a light effect corresponding to the scene condition.

The technical solutions provided by the embodiments of the present disclosure may include the following advantageous effects: the present disclosure may make corresponding controls according to changes of the scene statuses so as to realize intellectualized control of the smart light and to expand the applications of the smart light; and enable the control of the smart light free from manual operation, realize automatic control of the smart light, and make the smart light control more convenient.

### First embodiment

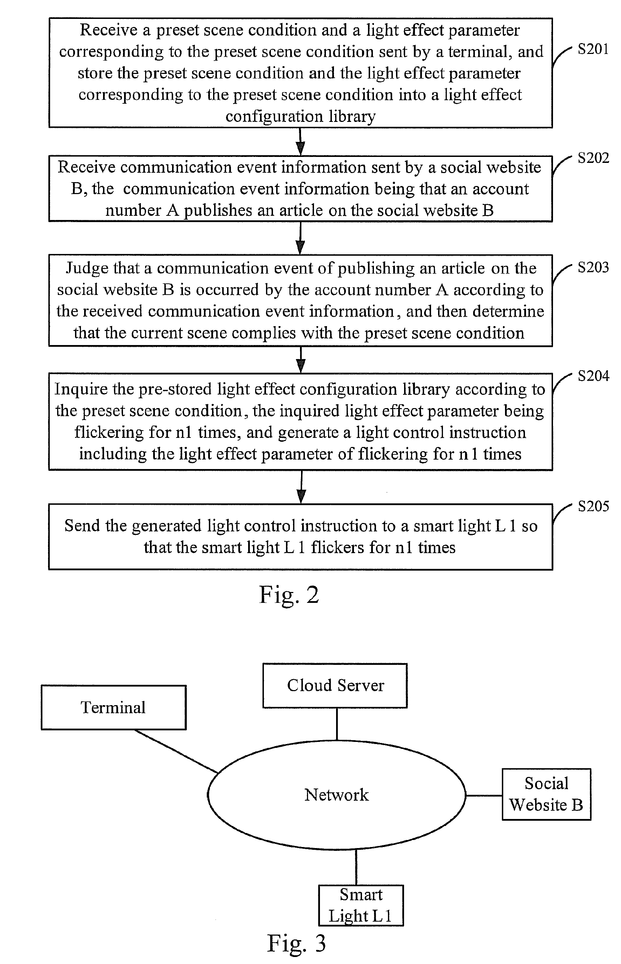

Fig. 2 is a flow chart of a method for controlling a smart light, according to a first exemplary embodiment. Fig. 3 is an application scene diagram of the method for controlling the smart light, according to the first exemplary embodiment. As shown in Fig. 3, the first embodiment is applied in the following scene: a cloud server is connected to a social website B, a terminal and a smart light L1 through network, and a user sets a scene condition in a terminal application as a condition wherein an account number A publishes an article on the social website B, and sets a corresponding light effect parameter as that the smart light L1 flickers for n1 times. The method in the first embodiment is applied to the cloud server, including the following steps.

In step S201, the scene condition and the light effect parameter corresponding to the scene condition sent by the terminal are received, and the scene condition and the light effect parameter corresponding to the scene condition are stored in a pre-stored light effect configuration library.

In step S202, communication event information that the account number A publishes an article on the social website B is received from the social website B,.

In step S203, the communication event of publishing an article on the social website B is judged to be conducted by the account number A according to the received communication event information, and then the current scene is determined to comply with the scene condition.

In step S204, the pre-stored light effect configuration library is inquired according to the scene condition, the inquired light effect parameter being flickering for n1 times, and a light control instruction including the light effect parameter of flickering for n1 times is generated.

In step S205, the generated light control instruction is sent to the smart light L1 so that the smart light L1 flickers for n1 times.

The first embodiment has the following advantageous effects: after the target contact publishes an article on the preset website, the smart light is controlled to flicker, thus capable of prompting the user that the target contact publishes an article. It is convenient for the user to view the article published by the target contact on the website in time. In the first embodiment, control of the smart light is associated with the article being published on the website, thus further expanding the application range of the smart light.

### Second embodiment

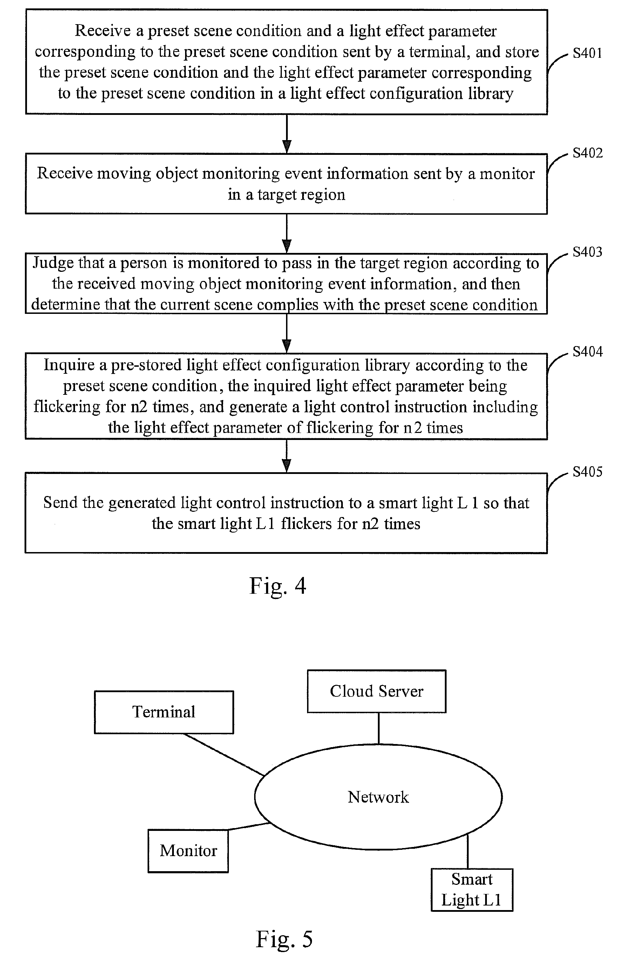

Fig. 4 is a flow chart of a method for controlling a smart light, according to a second exemplary embodiment. Fig. 5 is an application scene diagram of the method for controlling the smart light, according to the second exemplary embodiment. As shown in Fig. 5, the second embodiment is applied in the following scene: a cloud server is connected to a monitor, a terminal and a smart light L1 through network, and a user sets a scene condition in a terminal application as a condition wherein a person, monitored by the monitor, passes into a target region, and sets a corresponding light effect as that the smart light L1 flickers for n2 times. The method in the second embodiment is applied to the cloud server, including the following steps.

In step S401, the scene condition and the light effect parameter corresponding to the scene condition sent by the terminal are received, and the scene condition and the light effect parameter corresponding to the scene condition are stored in a pre-stored light effect configuration library.

In step S402, moving object monitoring event information sent by the monitor in a target region is received.

In step S403, the monitored person passes into the target region is judged according to the received moving object monitoring event information, then the current scene is determined to comply with the scene condition.

In step S404, the pre-stored light effect configuration library is inquired according to the scene condition, the inquired light effect parameter being flickering for n2 times, and a light control instruction including the light effect parameter of flickering for n2 times is generated.

In step S405, the generated light control instruction is sent to the smart light L1 so that the smart light L1 flickers for n2 times.

The second embodiment has the following advantageous effects: when detecting that a person passes into a target region, the smart light is controlled to flicker, thus capable of alarming when a person passes, so as to implement smart home.

### Third embodiment

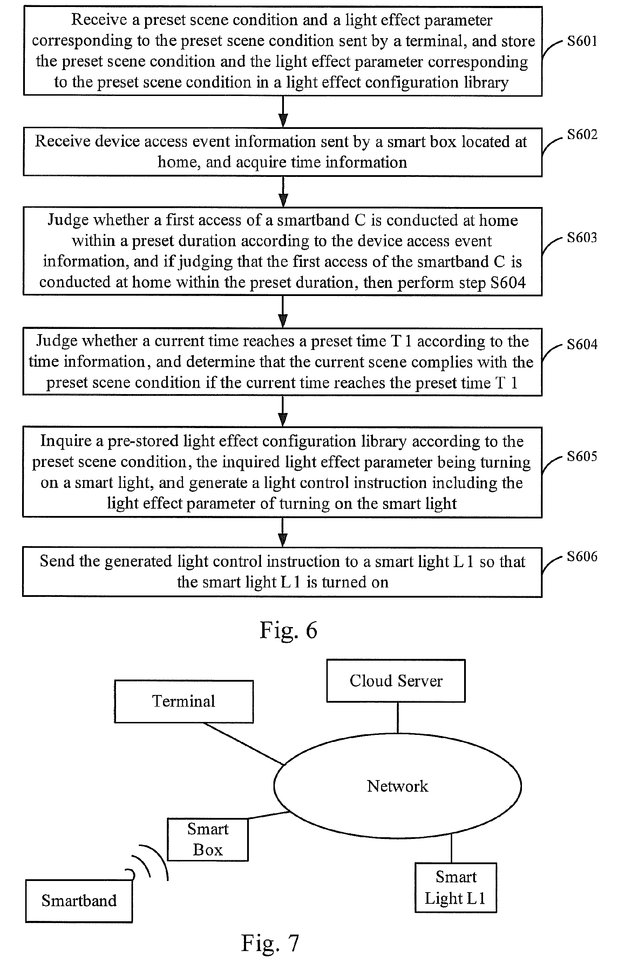

Fig. 6 is a flow chart of a method for controlling a smart light, according to a third exemplary embodiment. Fig. 7 is an application scene diagram of the method for controlling the smart light, according to the third exemplary embodiment. As shown in Fig. 7, the third embodiment is applied in the following scene: a cloud server is connected to a smart box having a bluetooth communication device, a terminal and a smart light L1 through network, the smart box is located at a user's home; and the user sets a scene condition in a terminal application as a condition wherein the user carrying a smartband C goes back home and wherein the time reaches a preset moment T1, and sets a corresponding light effect as that the smart light L1 is turned on, and the smartband C has a bluetooth communication device. The method in the third embodiment is applied to the cloud server, including the following steps.

In step S601, the scene condition and the light effect parameter corresponding to the scene condition sent by the terminal are received, and the scene condition and the light effect parameter corresponding to the scene condition are stored in a pre-stored light effect configuration library.

In step S602, device access event information sent by the smart box located at home is received, and time information is acquired.

The device access event information includes an identity and an access time of the smartband C.

For instance, when the smartband is near to the smart box, the smartband accesses to the smart box, and the identity (for example, a type and a serial number are taken as the identity) and the access time of the smartband are acquired, and the device access event information including the identity and the access time of the smartband is generated.

In step S603, whether a first access of the smartband C being conducted at home within a duration is judged according to the device access event information, and if it is judged that it is the first access of the smartband C at home within the duration, step S604 is performed.

In step S604, whether the current time reaches a preset time T1 is judged according to the time information, and if the current time reaches the preset time T1, the current scene is determined to comply with the scene condition.

In step S605, the pre-stored light effect configuration library is inquired according to the scene condition, the inquired light effect parameter being turning on the smart light, and a light control instruction including the light effect parameter of turning on the smart light is generated.

In step S606, the generated light control instruction is sent to the smart light L1 so that the smart light L1 is turned on.

The third embodiment has the following advantageous effects: when detecting that the user goes back home, the smart light is controlled to turn on at the preset moment, thus capable of automatically turning the smart light on for lighting when the user goes back home. In the third embodiment, the intelligentized lighting is realized so as to implement smart home.

### Fourth embodiment

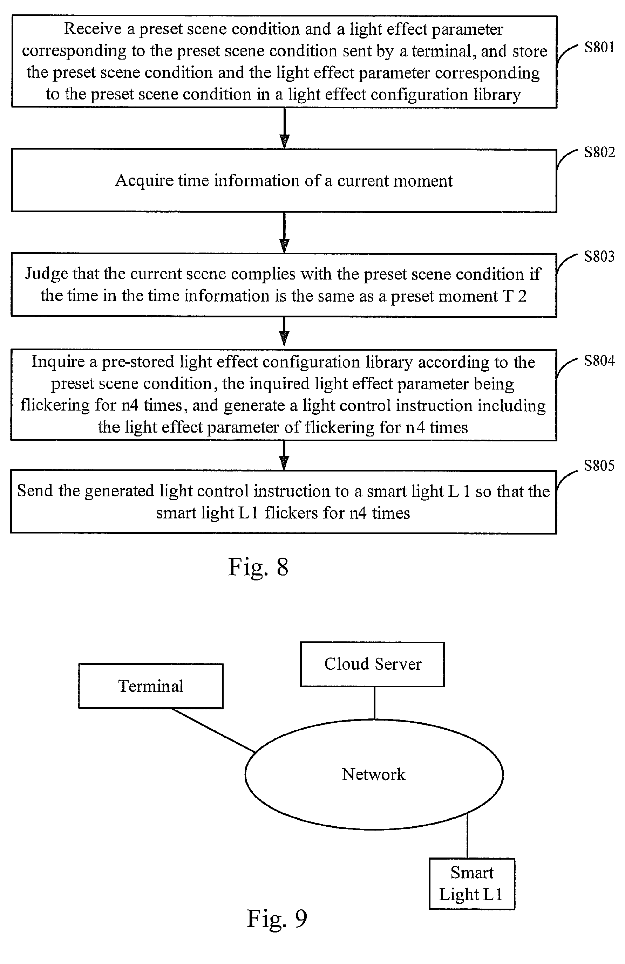

Fig. 8 is a flow chart of a method for controlling a smart light, according to a fourth exemplary embodiment. Fig. 9 is an application scene diagram of the method for controlling a smart light, according to the fourth exemplary embodiment. As shown in Fig. 9, the fourth embodiment is applied in the following scene: a cloud server is connected to a terminal and a smart light L1 through network, and a user sets in a terminal application a scene condition as a condition wherein the time reaches a preset moment T2, and a corresponding light effect as that the smart light L1 flickers for n4 times. The method in the fourth embodiment is applied to the cloud server, including the following steps.

In step S801, the scene condition and the light effect parameter corresponding to the scene condition sent by the terminal are received, and the scene condition and the light effect parameter corresponding to the scene condition are stored in a pre-stored light effect configuration library.

In step S802, time information of the current moment is acquired.

In step S803, when the time in the time information is the same as the preset moment T2, the current scene is judged to comply with the scene condition.

In step S804, the pre-stored light effect configuration library is inquired according to the scene condition, the inquired light effect parameter being flickering for n4 times, and a light control instruction including the light effect parameter of flickering for n4 times is generated.

In step S805, the generated light control instruction is sent to the smart light L1 so that the smart light L1 flickers for n4 times.

The fourth embodiment has the following advantageous effects: when the time reaches the preset moment, the smart light is controlled to flicker, thus capable of realizing an alarm clock function, and further expanding the application range of the smart light.

In the foregoing first embodiment to the fourth embodiment, applying the method in the cloud server is taken as example, but the present disclosure is not limited thereto. The method in the present disclosure may be applied in various devices, which is not specially limited herein. In the foregoing first embodiment to the fourth embodiment, light flickering and light turning on are taken as example for the light effect, but the present disclosure is not limited thereto. The light effect in the present disclosure may include various effects, which is not specially limited herein.

Moreover, a plurality of scene conditions may be sent at the same time, and the method of the present disclosure may be implemented as: acquiring the status information of the current scene, judging whether the current scene complies with the scene condition according to the status information, and when the current scene complies with the scene condition, controlling the smart light according to the light effect corresponding to the complied scene condition.

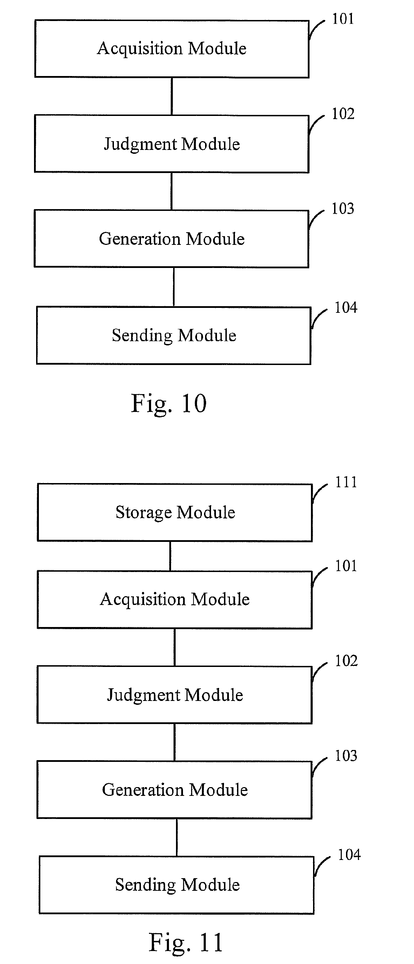

Fig. 10 is a block diagram of an apparatus for controlling a smart light, according to an exemplary embodiment, including:
an acquisition module 101 configured to acquire status information of a current scene;
a judgment module 102 configured to judge whether the current scene complies with a scene condition according to the status information acquired by the acquisition module 101;
a generation module 103 configured to inquire a pre-stored light effect configuration library according to the scene condition and generate a light control instruction corresponding to the scene condition if the judgment module 102 judges that the current scene complies with the scene condition;
wherein the light control instruction includes a light effect parameter enabling the smart light to present a light effect, and the pre-stored light effect configuration library includes a plurality of scene conditions and light effect parameters corresponding to respective scene conditions; and
a sending module 104 configured to send the light control instruction generated by the generation module 103 to the smart light so that the smart light presents a light effect corresponding to the scene condition.

In one embodiment, as shown in Fig. 11, the apparatus further includes:
a storage module 111 configured to receive and store a scene condition and a light effect parameter corresponding to the scene condition that are set by a user.

In one embodiment, the status information may include communication event information of a target contact; and

the judgment module may include:
a first judgment submodule configured to judge whether a specific communication event is conducted by the target contact according to the communication event information.

In one embodiment, the communication event information of the target contact may include: sharing contents by the target contact on a network platform; or, receiving communications sent by the target contact.

In one embodiment, the status information includes moving object monitoring event information in a target region; and

the judgment module may include:
a second judgment submodule configured to judge whether a monitored moving object passes into a target region according to the moving object monitoring event information.

In one embodiment, the status information may include device access event information in a target region, the device access event information including an identity and an access time of the device; and

the judgment module may include:
a third judgment submodule configured to judge whether a first access of a specific device is conducted in the target region within a duration according to the device access event information.

In one embodiment, the status information may include time information; and

the judgment module may include:
a fourth judgment submodule configured to judge whether the current time reaches a preset time according to the time information.

In one embodiment, the light effect parameter may include at least one of the following parameters:
a light on-off parameter, a light flicker times parameter, a light color parameter and a light intensity parameter.

The technical solutions provided by the embodiments of the present disclosure may include the following advantageous effects: the present disclosure may make corresponding controls according to changes of the scene condition so as to realize intellectualized control of the smart light and expand the applications of the smart light; and enable the control of the smart light free from manual operation, realize automatic control of the smart light, and make the smart light control more convenient.

With respect to the apparatuses in the above embodiments, the specific manners for performing operations for individual modules therein have been described in detail in the embodiments regarding the methods, which will not be elaborated herein.

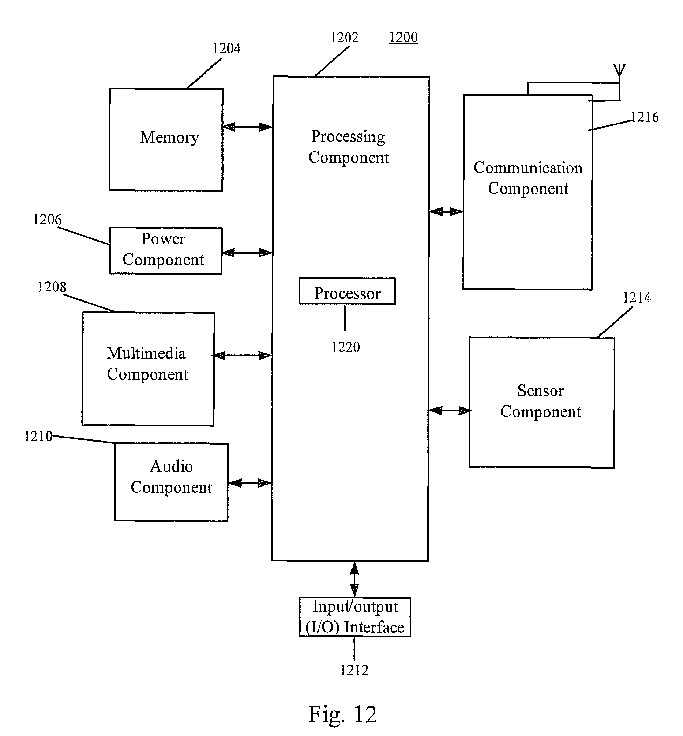

Fig. 12 is a block diagram of an apparatus 1200 for controlling a smart light, according to an exemplary embodiment. The apparatus is suitable for a terminal device. For example, the apparatus 1200 may be a mobile phone, a computer, a digital broadcast terminal, a messaging device, a gaming console, a tablet, a medical device, exercise equipment, a personal digital assistant, and the like.

Referring to Fig. 12, the apparatus 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the apparatus 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the apparatus 1200. Examples of such data include instructions for any applications or methods operated on the apparatus 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the apparatus 1200. The power component 1206 may include a power management system, one or more power sources, and any other components associated with the generation, management, and distribution of power in the apparatus 1200.

The multimedia component 1208 includes a screen providing an output interface between the apparatus 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and/or the rear camera may receive an external multimedia datum while the apparatus 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the apparatus 1200. For instance, the sensor component 1214 may detect an open/closed status of the apparatus 1200, relative positioning of components, e.g., the display and the keypad, of the apparatus 1200, a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the apparatus 1200 and other devices. The apparatus 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 1204, executable by the processor 820 in the apparatus 1200, for performing the above-described methods. For example, the non-transitory computer-readable storage medium may be a ROM, a RAM, a CD-ROM, a magnetic tape, a floppy disc, an optical data storage device, and the like.

An apparatus for controlling a smart light, includes:
a processor; and
a memory for storing instructions executable by the processor;
wherein the processor is configured to: acquire status information of a current scene;
judge whether the current scene complies with a preset scene condition according to the status information;
inquire a pre-stored light effect configuration library according to the preset scene condition and generate a light control instruction corresponding to the preset scene condition when the current scene complies with the preset scene condition, wherein the light control instruction includes a light effect parameter enabling the smart light to present a preset light effect, and the light effect configuration library includes a plurality of preset scene conditions and light effect parameters corresponding to respective preset scene conditions; and
send the generated light control instruction to the smart light so that the smart light presents a light effect corresponding to the preset scene condition.

The processor is also configured to: receive and store the preset scene condition and the light effect parameter corresponding to the preset scene condition that are set by a user.

The status information includes communication event information of a target contact; and

the processor may be configured to: judge whether a specific communication event is conducted by the target contact according to the communication event information.

The status information includes moving object monitoring event information in a target region; and

the processor may be configured to: judge whether a moving object is monitored to pass in the target region according to the moving object monitoring event information.

The status information includes device access event information in the target region, the device access event information including a device identity and a device access time; and

the processor may be configured to: judge whether a first access of a specific device is conducted in the target region within a preset duration according to the device access event information.

The status information includes time information; and

the processor may be configured to: judge whether the current time reaches a preset time according to the time information.

A non-transitory computer readable storage medium, when an instruction in a storage medium is performed by a processor of a mobile terminal, enables the mobile terminal to perform a method for controlling a smart light, wherein the method includes:

acquiring status information of a current scene;

judging whether the current scene complies with a preset scene condition according to the status information;

inquiring a pre-stored light effect configuration library according to the preset scene condition and generating a light control instruction corresponding to the preset scene condition when the current scene complies with the preset scene condition, wherein the light control instruction includes a light effect parameter enabling the smart light to present a preset light effect, and the light effect configuration library includes a plurality of preset scene conditions and light effect parameters corresponding to respective preset scene conditions; and

sending the generated light control instruction to the smart light so that the smart light presents a light effect corresponding to the preset scene condition.

The method may further include:
receiving and storing the preset scene conditions and the light effect parameters corresponding to the preset scene conditions that are set by a user.

The status information includes communication event information of a target contact; and

the judging whether the current scene complies with the preset scene condition according to the status information may include:
judging whether a specific communication event is conducted by the target contact according to the communication event information.

The communication event information of the target contact may include: sharing contents by the target contact on a preset network platform; or, receiving communications sent by the target contact.

The status information may include moving object monitoring event information in a target region; and

the judging whether the current scene complies with the preset scene condition according to the status information may include:
judging whether a moving object is monitored to pass in the target region according to the moving object monitoring event information.

The status information may include device access event information in the target region, the device access event information including a device identity and a device access time; and

the judging whether the current scene complies with the preset scene condition according to the status information may include:

judging whether a first access of a specific device is conducted in the target region within a preset duration according to the device access event information.

The status information may include time information; and

the judging whether the current scene complies with the preset scene condition according to the status information may include:

judging whether the current time reaches a preset time according to the time information.

The light effect parameter includes at least one of the following parameters:

a light on-off parameter, a light flicker times parameter, a light color parameter and a light intensity parameter.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for controlling a smart light, **characterized in that**, the method comprises the steps of:
acquiring (S101) status information of a current scene;
judging (S102) whether the current scene complies with a scene condition according to the status information;
inquiring (S103) a pre-stored light effect configuration library according to the scene condition and generating a light control instruction corresponding to the scene condition if the current scene complies with the scene condition, wherein the light control instruction comprises a light effect parameter enabling the smart light to present a light effect, and wherein the pre-stored light effect configuration library comprises a plurality of preset scene conditions and light effect parameters corresponding to respective preset scene conditions; and
sending (S104) the generated light control instruction to the smart light so that the smart light presents a light effect corresponding to the scene condition.

2. The method according to claim 1, **characterized in that**, the method further comprises:
receiving and storing (S201, S401, S601, S801) the scene condition and the light effect parameter corresponding to the scene condition which are set by a user.

3. The method according to claim 1 or 2, **characterized in that**,
the status information includes communication event information of a target contact; and the step of judging (S102) whether the current scene complies with the scene condition according to the status information comprises a step of:
judging (S203) whether a specific communication event is conducted by the target contact according to the communication event information;
the status information includes moving object monitoring event information in a target region; and
the step of judging (S102) whether the current scene complies with the scene condition according to the status information comprises a step of:
judging (S403) whether a monitored moving object passes into the target region according to the moving object monitoring event information;
if the status information includes device access event information in a target region, the device access event information including a device identity and a device access time; and
the step of judging (S102) whether the current scene complies with the scene condition according to the status information comprises a step of:
judging (S603) whether a first access of a specific device is conducted in the target region within a duration according to the device access event information.

4. The method according to claim 3, **characterized in that**,
the communication event information of the target contact comprises: sharing contents by the target contact on a network platform; or, receiving communications sent by the target contact.

5. The method according to any one of claims 1 to 4, **characterized in that**,
the status information includes time information; and
the step of judging (S102) whether the current scene complies with the scene condition according to the status information comprises a step of :
judging (S803) whether a current time reaches a preset time according to the time information.

6. The method according to any one of claims 1 to 5, **characterized in that**, the light effect parameter includes at least one of the following parameters:
a light on-off parameter, a light flicker times parameter, a light color parameter and a light intensity parameter.

7. An apparatus for controlling a smart light, **characterized in that**, the apparatus comprises:
an acquisition module (101) configured to acquire status information of a current scene;
a judgment module (102) configured to judge whether the current scene complies with a scene condition according to the status information;
a generation module (103) configured to, if the judgment module (102) judges that the current scene complies with the scene condition, inquire a pre-stored light effect configuration library according to the scene condition and generate a light control instruction corresponding to the scene condition, wherein the light control instruction comprises a light effect parameter enabling the smart light to present a light effect, and the light effect configuration library comprises a plurality of preset scene conditions and light effect parameters corresponding to respective preset scene conditions; and
a sending module (104) configured to send the light control instruction generated by the generation module (103) to the smart light so that the smart light presents a light effect corresponding to the scene condition.

8. The apparatus according to claim 7, **characterized in that**, the apparatus further comprises:
a storage module (111) configured to receive and store the scene condition and the light effect parameter corresponding to the scene condition which are set by a user.

9. The apparatus according to claim 7 or 8, **characterized in that**,
the status information includes communication event information of a target contact; and
the judgment module (102) comprises:
a first judgment submodule configured to judge whether a specific communication event is conducted by the target contact according to the communication event information;
the status information includes moving object monitoring event information in a target region; and
the judgment module (102) comprises:
a second judgment submodule configured to judge whether a monitored moving object passes into the target region according to the moving object monitoring event information;
the status information comprises device access event information in a target region, the device access event information comprising a device identity and a device access time; and
the judgment module (102) comprises:
a third judgment submodule configured to judge whether a first access of a specific device is conducted in the target region within a duration according to the device access event information.

10. The apparatus according to claim 9, **characterized in that**,
the communication event information of the target contact comprises: sharing contents by the target contact on a network platform; or, receiving communications sent by the target contact.

11. The apparatus according to any one of claims 7 to 11, **characterized in that**,
the status information comprises time information; and
the judgment module (102) comprises:
a fourth judgment submodule configured to judge whether a current time reaches a preset time according to the time information.

12. The apparatus according to any one of claims 7-11, **characterized in that**, the light effect parameter comprises at least one of the following parameters:
a light on-off parameter, a light flicker times parameter, a light color parameter and a light intensity parameter.

13. An apparatus for controlling a smart light, **characterized in that**, the apparatus comprises:
a processor (1220); and
a memory (1204) for storing instructions executable by the processor (1220);
wherein the processor (1220) is configured to:
acquire status information of a current scene;
judge whether the current scene complies with a preset scene condition according to the status information;
inquire a pre-stored light effect configuration library according to the preset scene condition and generate a light control instruction corresponding to the preset scene condition if the current scene complies with the preset scene condition, wherein the light control instruction comprises a light effect parameter enabling the smart light to present a preset light effect, and the light effect configuration library comprises a plurality of preset scene conditions and light effect parameters corresponding to respective preset scene conditions; and
send the generated light control instruction to the smart light so that the smart light presents a light effect corresponding to the preset scene condition.

14. A computer program including instructions for executing the steps of a method for controlling a smart light according to any one of claims 1 to 6 when said program is executed by a computer.

15. A recording medium readable by a computer and having recorded thereon a computer program including instructions for executing the steps of a method for controlling a smart light according to claims 1 to 6.
